# EUROPÄISCHE PATENTSCHRIFT

(11) **EP 0 694 742 B1**
(45) Veröffentlichungstag und Bekanntmachung des Hinweises auf die Patenterteilung: **02.12.1998**
(21) Anmeldenummer: 95111552.6
(22) Anmeldetag: 22.07.1995
(51) Int. Cl.: F24D 10/00, F24D 19/10

(54) **Warmwasserheizungssystem**
Hot water heating system
Système de chauffage à eau chaude

(30) Priorität: 26.07.1994 DE 4426401
(43) Veröffentlichungstag der Anmeldung: 31.01.1996
(73) Patentinhaber: Helmut Bälz GmbH, D-74076 Heilbronn (DE)
(72) Erfinder: Bälz, Uwe, Dr., D-80687 München (DE); Maier, Dietlof, A-2700 Neustadt (AT)
(74) Vertreter: Rüger, Rudolf, Dr.-Ing.

(56) Entgegenhaltungen:
- CH-A- 175 589
- DE-A- 1 673 461
- DE-A- 3 701 283
- FR-A- 2 246 817

## Beschreibung

Warmwasserheizungssysteme sind sowohl bei Anlagen mit lediglich wenigen Wärmeverbrauchern als auch bei weiter verzweigten Anlagen mit einer größeren Anzahl von Wärmeverbrauchern gebräuchlich. Auf der Seite der Wärmeerzeugung sind Brennwert-Heizkessel bekannt geworden. Sie eignen sich insbesondere für Niedertemperatursysteme mit tiefen Rücklauftemperaturen sowie mit Volumenstromeinstellung (bzw. -reduzierung) im Heizkreis. Dies bedeutet, daß bei verringertem Wärmebedarf die Strömungsgeschwindigkeit und damit der Durchsatz des als Heizmedium dienenden Warmwassers reduziert wird. Der Heizkessel gibt bei konstanter Vorlauftemperatur eine entsprechend angepaßte Heizleistung ab.

Die Aufteilung der je nach im System vorhandenem Gesamtwärmebedarf unterschiedlichen Volumenströme auf die einzelnen Wärmeverbraucher bzw. Gruppen von Wärmeverbrauchern erfolgt dabei, indem das von elektrischen Pumpen in einer Vorlaufleitung geförderte Heizwasser an den einzelnen Wärmeverbraucherstationen abgenommen und in diesen Kreisen mittels elektrischer Pumpen umgewälzt wird. Dabei weist jede Wärmeverbraucherstation wenigstens eine elektrische Pumpe und ein oder mehrere gesteuerte Ventile auf, mittels derer die in der Wärmeverbraucherstation erforderlichen Druckverhältnisse aufgebaut werden.

Bei verringertem Energiebedarf an dem betreffenden Wärmeverbraucher sollte dieser mit verminderter Vorlauftemperatur betrieben werden, um unnötige Energieverluste zu vermeiden. Zur Anpassung der Vorlauftemperatur des einzelnen Wärmeverbrauchers an die Temperatur des in der Vorlaufleitung befindlichen Heizwassers ist es üblich, diesem aus der Rücklaufleitung entnommenes Wasser beizumischen, wozu entsprechende Rücklaufbeimischungseinrichtungen dienen. Bei diesen führt von der Rücklaufleitung eine Bypassleitung zu einem Anschluß eines in der Vorlaufleitung liegenden Dreiwegeventils. Um eine solche hydraulische Verzweigung zu realisieren, werden hydraulische Weichen, Differenzdruckregler und Mengenbegrenzer erforderlich, was zu einem insgesamt hohen Material-, Herstellungs- und Installationsaufwand führt.

Aus der DE-AS 1 928 575 ist ein solches dort als Pumpensammelheizungsanlage bezeichnetes Heizungssystem bekannt, das jedoch lediglich eine einzige Wärmeverbrauchergruppe aufweist. Dieses Heizungssystem wird von einem Heizkessel mit Wärme versorgt, dessen Vorlaufleitung über ein Abzweigventil und eine elektrische Pumpe zu den Wärmeverbrauchern führt. Mit seiner Rücklaufleitung ist der Heizkessel unmittelbar mit den Wärmeverbrauchern verbunden, wobei von der Rücklaufleitung eine Bypassleitung zu dem Abzweigventil geht. Die Bypassleitung ist dabei so angeordnet, daß sie zwischen der elektrischen Umwälzpumpe und dem Heizkessel liegt. Die Umwälzpumpe ist von einem Steuergerät gesteuert, das seinerseits die Außentemperatur und die zwischen der elektrischen Umwälzpumpe und den Wärmeverbrauchern vorhandene Vorlauftemperatur auswertet. Das Abzweigventil ist von einem Stellantrieb betätigt, der seinerseits von der von der Pumpe verursachten Druckdifferenz gesteuert wird. Mit bei fallender Außentemperatur zunehmender Pumpendrehzahl steigt auch die von der Pumpe verursachte Druckdifferenz, wodurch der Stellantrieb die Bypassleitung drosselt und allmählich verschließt. Dadurch wird die Vorlauftemperatur des an die Wärmeverbraucher gelieferten Heizwassers erhöht.

Mit diesem Heizungssystem ist die individuelle Steuerung von Wärmeverbrauchergruppen nicht möglich. Das Mischverhältnis zwischen Vor- und Rücklaufwasser steht nach Art einer Vorwärtssteuerung in einem fixen Zusammenhang mit der Pumpendrehzahl.

Aus der DE-OS 2 342 841 ist es bekannt, bei Hochdruck-Heizwasseranlagen das Dreiwegemischventil und die Umwälzpumpe durch eine Strahlpumpe zu ersetzen. Dabei ist die Strahlpumpe in einer zu dem Verbraucher führenden Hochdruckheizwasserleitung vorgesehen. Die Strahlpumpe saugt über eine Abzweigleitung Rücklaufwasser aus der Rücklaufleitung an und mischt es dem Vorlaufwasser bei. Die Strahlpumpe wird dabei von einem Stellmotor eingestellt, der von der Vorlauftemperatur des Gemischs aus dem Heizwasser der Vorlaufleitung und dem aus der Rücklaufleitung angesaugten Wasser gesteuert wird.

Bei dieser Hochdruck-Heizwasseranlage dient die Strahlpumpe dazu, solche Betriebsbereiche sicher zu erreichen, bei denen das Verhältnis der Vorlauf-Heizwassermenge zu der Beimischmenge sehr klein ist, weil viel ausgekühltes Rücklaufwasser beigemischt werden muß, um hohe Temperaturen des Vorlaufs auf die niedrige Gebrauchstemperatur beim Verbraucher herabzusetzen. Heizwasser-Hochdruckanlagen zeichnen sich jedoch durch einen lediglich beschränkten Wirkungsgrad aus. Außerdem sind in einem ausgedehnteren Heizwasser-Hochdrucksystem mehrere Pumpen zur Aufrechterhaltung eines einheitlich hohen Gesamtdruckes im System erforderlich.

Aus der DE 3 125 583 A1 ist eine Strahlpumpe für ein Warmwasserheizungssystem bekannt. Diese Strahlpumpe ist in eine Warmwasserheizungs- oder Bereitungsanlage eingebaut, das an ein Warmwasserheizungsnetz angeschlossen ist. Die Strahlpumpe ist dabei mit ihrem Einspeisekopf an eine netzseitige Vorlaufleitung angeschlossen. Diffusorseitig ist der Wärmeverbraucher angeschlossen. Rücklaufwasser zum Beimischen zu dem Vorlaufwasser wird über eine Bypassleitung aus der Rücklaufleitung herangeführt.

Bei derartigen Warmwasserheizungsanlagen treten bei der Erzeugung und Bereitstellung des Heizwassers nicht unerhebliche Energieverluste auf. Die Energieverteilung in dem Heizwassernetz wird außerdem über mehrere elektrische Pumpen vorgenommen, die den Installations- und Wartungsaufwand bei einem solchen Heizwassernetz erhöhen.

Aus der DE-A-3701283 ist eine Heizungsanlage mit einem Heizkessel bekannt, der in einem Heizkesselkreislauf angeordnet ist. Der Heizkesselkreislauf geht über eine Vorlaufleitung mit einer Umwälzpumpe zu einem Durchgang einer Strahlpumpe von dem eine Treibdüse einen regulierten Strom abzweigt. Der Durchgang führt zu einer Rücklaufleitung, die über eine Pumpe an den Heizkessel angeschlossen ist. Über die Strahlpumpe ist der Heizkesselkreislauf mit einem Heizungskreislauf verknüpft, der über die Strahlpumpe ständig heißes Wärmeträgermedium erhält, das in variablen Anteilen mit Rücklauf vermischt ist. Der Überschuß wird in den Heizkesselkreislauf zurückgeführt. Es sind zwei Kreisläufe (Heizkesselkreislauf, Heizungskreislauf) vorhanden, die miteinander verknüpft sind.

Dieses Konzept führt bei Teillastbetrieb zu hohen Rücklauftemperaturen für den Heizkessel.

Aus Krinninger, "Der Einsatz regelbarer Wasserstrahlpumpen in der Heizungstechnik", Heizungstechnische Rundschau Februar 1981 Seite 81, ist ein Heizungssystem mit einem Heizkessel bekannt, an dessen Vorlaufleitung ein Pumpenblock angeschlossen ist. Der Pumpenblock führt zu einer Verteilungsleitung, die auf verschiedene Heizkreise verweigt. Von der Verteilungsleitung zweigt außerdem ein Bypass zu der Rücklaufleitung des Heizkessels ab. Die Bypassleitung enthält ein gesteuertes Ventil, mit dem der über die Bypassleitung gebildete Kesselkreislauf reguliert wird.

Wie bei dem vorstehend diskutierten Stand der Technik, sind bei Teillastbetrieb, d.h. bei geringer Entnahme von Vorlauf aus der Verteilungsleitung und dem Kesselkreislauf hohe Rücklauftemperaturen zu erwarten.

Davon ausgehend ist es Aufgabe der Erfindung, ein Heizungssystem zu schaffen, das auch bei Teillastbetrieb mit einem guten Wirkungsgrad arbeitet und das sich durch einen geringen Installations- und Wartungsaufwand auszeichnet.

Diese Aufgabe wird durch ein Heizungssystem mit den Merkmalen des Patentanspruchs 1 gelöst.

Bei dem erfindungsgemäßen Heizungssystem wird als Wärmequelle wenigstens ein Brennwertkessel verwendet. Bei einem solchen Brennwertkessel wird die in dem verwendeten Brennstoff, meist Gas, enthaltene Energie sehr rationell ausgenutzt. Die den Kessel verlassenden Rauchgase sind relativ kalt, so daß auf diesem Weg nur sehr wenig Wärmeenergie verloren geht. Auch sind Brennwertkessel thermisch gut isoliert. Im Vergleich zu herkömmlichen Niedertemperaturheizkesseln, die eine Rücklauftemperatur von 60 bis 65° erfordern, können Brennwertkessel mit besonders niedrigen Rücklauftemperaturen gefahren werden. Dies ermöglicht niedrige Abgastemperaturen und damit verbunden eine gute Wärmeausnutzung.

Eine Rücklauftemperaturregelung, wie sie bei herkömmlichen Niedertemperaturheizkesseln zur Sicherstellung der hohen Rücklauftemperaturen erforderlich ist, kann bei der Verwendung von Brennwertkesseln entfallen. In dem Heizungssystem ist im Gegensatz zu Systemen mit Niedertemperaturheizkesseln, bei denen der Heizkessel zur Regelung der Rücklauftemperatur eine größere Heizwassermenge führen müssen, als von den Wärmeabnehmerkreisen her gesehen erforderlich ist, kein zusätzlicher Kreislauf und keine zusätzliche Heizwassermenge erforderlich. Bei herkömmlichen Heizungssystemen wird die Trennung von Energiebereitstellung und Energieabnahme durch den Einbau einer hydraulischen Entkopplung erreicht. Diese entfällt bei der Anlage mit Brennwertkessel; die entsprechenden Anlagenkomponenten der Rücklauftemperaturregelung samt Pumpe und die hydraulische Entkopplung werden eingespart. Im einzelnen sind die hydraulischen Weichen, Differenzdruckregler, Mengenbegrenzer und sonstigen Elemente der Rücklaufbeimischungseinrichtung überflüssig. Das ergibt eine erhebliche Einsparung bei der Herstellung und Installation.

Der Brennwertkessel muß nur die minimale Wassermenge führen, die von den Abnehmern her gesehen erforderlich ist. Dadurch kann die Pumpenleistung auf ein Minimum reduziert werden und die Energiebilanz ist verbessert. Insgesamt ist das erfindungsgemäße System somit deutlich wirtschaftlicher.

Die Kombination des Brennwertkessels mit einer eine einzige Pumpeneinheit enthaltenden Energieverteilungseinrichtung und einer Strahlpumpe zur Regelung der Abnehmerkreise kann ohne gesonderte Einstellung des Volumenstromes der Strahlpumpe und des Brennwertkessels erfolgen. Der Brennwertkessel wird ohne Nachteile mit variablem Volumenstrom betrieben, der mit dem Volumenstrom der Strahlpumpe übereinstimmt. Das System kommt deshalb ohne Leitungsverbindung zwischen der von dem Brennwertkessel zur der Strahlpumpe führenden Vorlaufleitung und der Rücklaufleitung aus.

Niedrige Rücklauftemperaturen werden durch Wärmeverbraucher erreicht, die die im Warmwasser enthaltene Wärme sehr gut ausnutzen und somit kaltes Rücklaufwasser abgeben. Solche Wärmeverbraucher sind meist so ausgelegt, daß sie ihre volle Wärmeleistung schon mit relaiv niedriger Vorlauftemperatur erbringen. Diese wird durch Beimischen von Rücklaufwasser zu dem zu dem Wärmeverbraucher geführten Vorlaufwasser erreicht. In der Praxis wurden dazu bislang in Verbindung mit Brennwertkesseln gesonderte Heizungspumpen verwendet, die den einzelnen Wärmeabnehmerkreis gesondert betreiben und die über ein entsprechend geschaltetes Dreiwegeventil die Beimischung von Rücklaufwasser in das zu dem Wärmeverbraucher geführte Warmwasser erlauben. Bei der Erfindung hingegen findet die Energieverteilung, d.h. die Verteilung von Warmwasser, das von den Brennwertkesseln erwärmt worden ist, auf einzelne Energieabnehmerkreise in einer einzigen Energieverteilungseinrichtung statt. Diese Energieverteilungseinrichtung weist die einzige im System vorhandene elektrische Pumpeinrichtung auf.

Die einzelnen Energieabnehmerkreise enthalten keinerlei elektrische Pumpen. Damit ist der Installations- und Wartungsaufwand gegenüber den bekannten Heizungssystemen mit Brennwerttechnik deutlich reduziert. Die Einstellung der einzelnen Energieabnehmerkreise auf unterschiedlichen Wärmebedarf erfolgt auf rein hydrodynamischem Wege über Strahlpumpen, die aus der Rücklaufleitung Rücklaufwasser ansaugen, um es dem Vorlaufwasser beizumischen.

Außerdem ist für jeden Energieabnehmerkreis eine Regeleinrichtung vorgesehen, die die jeweilige Strahlpumpe entsprechend dem Wärmebedarf steuert. Dabei können die Energieabnehmerkreise sowohl witterungsgeführt, d.h. in Abhängigkeit von der Außentemperatur, als auch auf eine konstante Vorlauftemperatur hin gesteuert werden.

In dem Heizungssystem wirken somit mehrere unabhängig voneinander einstellbare Regelkreise zusammen. Der oder die Brennwertkessel werden durch Einstellen und gegebenenfalls Reduzierung des Volumenstromes des Vorlaufwassers wenigstens nahezu bei ihrem günstigsten (optimalen) Betriebspunkt (Arbeitspunkt) gehalten. Die Wärmeabnehmerkreise dagegen werden hinsichtlich ihrer Energieabnahme über die Temperatur des Vorlaufwassers geregelt. Unabhängig von dem Volumenstrom wird dem Vorlaufwasser dazu durch Strahlpumpen rein hydrodynamisch Rücklaufwasser beigemischt. Dadurch können die Wärmeverbraucher auf den minimal erforderlichen Wärmeverbrauch eingestellt werden. Die doppelte Optimierung, nämlich sowohl bei dem Brennwertkessel als auch bei dem Wärmeverbraucher, ergibt einen guten Gesamtwirkungsgrad.

Eine gute Ausnutzung des in dem Brennwertkessel verbrannten Brennstoffs wird erhalten, wenn das Heizungssystem ein Niedertemperatursystem ist, bei dem die Rücklauftemperatur nahe bei der Temperatur des Mediums liegt, das bei dem Wärmeverbraucher zu erwärmen ist. Ist der Wärmeverbraucher beispielsweise ein Boiler, läßt sich das Rücklaufwasser ohne weiteres bis auf Zimmertemperatur oder noch darunter auskühlen. Auch beim Betrieb von Raumheizungen, bei denen als Medium die Zimmerluft, eine Wand oder ein Fußboden zu erwärmen ist, kann das Rücklaufwasser sehr weit ausgekühlt werden.

Der Brennwertkessel, der vorzugsweise einen Gebläsebrenner aufweist, kann dadurch die in den Abgasen enthaltene Wärmeenergie gut ausnutzen.

Um einerseits eine erhöhte Wärmeleistung erbringen und bedarfsweise das Heizungssystem auch auf geringere Wärmeleistungen herunterfahren zu können, ist es vorteilhaft, wenn als Wärmequelle mehrere Brennwertkessel zusammengeschaltet sind. Die Brennwertkessel sind dabei vorzugsweise im "Tichelmann-System" miteinander verrohrt, wobei entsprechend der Kesselfolgeschaltung mehrere Kessel bedarfsweise über motorgesteuerte Absperrklappen zu- oder abgeschaltet werden können. Die Absperrklappen sind dabei üblicherweise in der Rücklaufleitung des Brennwertkessels angeordnet. Die Absperrklappen können dabei von der Steuereinrichtung gesteuert sein, die auch die Energieabnehmerkreise steuern. Jedoch ist es auch möglich, für den Betrieb der Brennwertkessel eine gesonderte Steuereinrichtung vorzusehen.

Zur Überwachung der Anlage kann an dem von dem Brennwertkessel wegführenden Vorlaufrohr ein mit der Steuereinrichtung verbundener Temperatursensor vorgesehen sein. Dieser Temperatursensor ist insbesondere bei Mehrkesselanlagen erforderlich, bei denen anhand der gemessenen Vorlauftemperatur die Kesselfolgeschaltung gesteuert wird.

Außerdem kann in der Vorlaufleitung des Brennwertkessels zur Messung und Einstellung des Volumenstroms des ihn durchströmenden Wassers eine Absperrarmatur vorgesehen sein.

Die an dem einzelnen oder dem Block von Brennwertkesseln angeschlossene Energieverteilungseinrichtung weist eine einzige elektrische Pumpeinrichtung auf, die vorzugsweise in der Vorlaufleitung liegt. Die elektrische Pumpeinrichtung bringt den für den Umlauf des Wassers in dem System erforderlichen Druck auf, ohne dabei den oder die Brennwertkessel unter größeren Druck zu setzen. Diese liegen auf der Saugseite der Pumpeinrichtung, also auf der Seite mit niedrigerem Druck. Die Pumpeinrichtung kann sowohl eine einzelne elektrische Pumpe als auch, aus Sicherheitsgründen, eine Zwillingspumpe oder zwei parallel geschaltete Einzelpumpen enthalten. In jedem Falle aber ist es vorteilhaft, wenn der Pumpeinrichtung jeweils ein Schwingungsdämpfer und bedarfsweise ein Absperrventil vor- und nachgeschaltet ist. Die Schwingungsdämpfer verhindern ein Ausbreiten von Körperschall in dem Heizungssystem, so daß es bei dem entsprechenden Abnehmer ohne wahrnehmbare Geräusche arbeitet. Außerdem ist es vorteilhaft, wenn bei Verwendung von Einzelpumpen jeder eine federbelastete Rückschlagklappe nachgeschaltet ist. Diese verhindert im Fall, daß nur eine Pumpe läuft, einen strömungsmäßigen Kurzschluß derselben über die andere Pumpe.

Die Pumpeinrichtung weist eine Differenzdrucküberwachungseinrichtung auf, die die Druckdifferenz zwischen dem Pumpenausgang und dem Pumpeneingang bei laufender Pumpe unabhängig von der einstellbaren Durchflußmenge im wesentlichen konstant hält. Dadurch wird unabhängig von der von den Energieverbraucherkreisen abgenommenen Wassermenge an dem Eingang des jeweiligen Energieverbraucherkreises ein konstanter Druck aufgebaut, der dessen hydrodynamische Regelung gestattet. Die hydrodynamische Regelung erfolgt über die Strahlpumpen, die in Abhängigkeit von ihrer Einstellung dem Vorlaufwasser Rücklaufwasser beimischen.

Zur Einstellung und Messung des Volumenstromes des durch die Energieverteilungseinrichtung durchströmenden Heizwassers weist diese eine in ihrer Rücklaufleitung angeordnete Absperrarmatur auf. Diese Absperrarmatur steuert den die Energieverteilungseinrichtung durchströmenden Volumenstrom und somit den Gesamtvolumenstrom des Heizungssystems. Dieser Volumenstrom kann zur Prozeßoptimierung an bestimmende Parameter, beispielsweise die Außentemperatur oder sonstige Witterungsverhältnisse, angepaßt werden.

Jeder Energieabnehmerkreis mit einem oder mehreren Wärmeverbrauchern ist mit seiner Vorlaufleitung an einen an der Strahlpumpe vorhandenen Diffusorausgang angeschlossen, an dem von der Energieverteilungseinrichtung ankommendes Vorlaufwasser oder je nach Einstellung der Strahlpumpe ein Gemisch aus diesem und Rücklaufwasser ansteht. Dabei ist die Strahlpumpe mit ihrem Sauganschluß über eine Bypassleitung an die von dem Wärmeverbraucher kommende Rücklaufleitung angeschlossen. Der Einspeiseanschluß der Strahlpumpe liegt an der von der Energieverteilungseinrichtung herkommenden Vorlaufleitung. Die Regelung des Energieabnehmerkreises erfolgt somit rein hydrodynamisch; eine elektrische Heizungspumpe ist überflüssig.

Die Strahlpumpe ist über eine Reguliereinrichtung, die von einem Elektromotor betätigt sein kann, einstellbar, wobei das Mischverhältnis, d.h. das Verhältnis zwischen miteinander gemischtem Vor- und Rücklaufwasser, einstellbar ist. Die Einstellung wird über den Elektromotor von der Steuereinrichtung vorgenommen, die den Energieabnehmerkreis nach verschiedenen Kriterien steuern kann. Beispielsweise kann ein Außentemperatursensor vorgesehen sein, über den der Energieabnehmerkreis geführt ist. Es ist jedoch auch möglich, einen Temperatursensor vorzusehen, über den die Steuereinrichtung die Vorlauftemperatur des Wärmeverbrauchers überwacht. Somit kann beispielsweise eine konstante Vorlauftemperatur eingestellt werden.

Ein dem Wärmeverbraucher vorgeschaltetes Absperrventil gestattet dessen bedarfsweise Stillsetzung.

Der Wärmeverbraucher kann ein Heizkörper, ein Radiator, ein Boiler, ein Luftheizregister oder ein Wärmetauscher sein, über den ein weiterer Heizkreislauf angekoppelt ist. Wenn als Wärmeverbraucher unter anderem auch ein Boiler zur Bereitstellung von Warmwasser vorgesehen ist, kann dieser in einer Vorrangschaltung angeschlossen sein. Die ermöglicht bei Wasserentnahme eine schnelle Erwärmung des aus dem Wassernetz nachströmenden Kaltwassers.

In einem über den Wärmetauscher angeschlossenen weiteren oder zweiten Wärmeträgerkreislauf kann als Wärmeverbraucher eine Strahlungsheizungseinrichtung oder auch ein Boiler angeordnet sein. Dieser zweite Wärmeträgerkreislauf weist eine elektrische Pumpe auf, mit der die Strömungsgeschwindigkeit in dem zweiten Kreislauf unabhängig von der Temperatur des Wärmetauschers einstellbar ist.

Es kann zwischen der Energieverteilungseinrichtung und dem Wärmeverbraucher eine Vorrichtung zur Verhinderung der Auskühlung der Vorlaufleitung vorgesehen sein. Diese Vorrichtung ist in einfacher Weise eine zwischen Vor- und Rücklaufleitung angeordnete Leitung, in der ein temperaturabhängig gesteuertes Ventil liegt, das öffnet, wenn die Temperatur der Rücklaufleitung einen vorgegebenen Grenzwert unterschreitet. Dieser Grenzwert liegt nur geringfügig unterhalb der bei Betrieb des Systems vorhandenen Rücklauftemperatur, die ohnehin recht niedrig liegt. Wird sie unterschritten, öffnet das Ventil und läßt aus der Vorlaufleitung solange ausgekühltes Vorlaufwasser ab, bis dieses wenigstens die vorgesehene Rücklauftemperatur überschreitet.

Diese Einrichtung ist vorzugsweise bei dem weitesten von der Energieverteilungsrichtung entfernt liegenden Wärmeverbraucher angeordnet.

In der Zeichnung ist ein Ausführungsbeispiel der Erfindung dargestellt. Es zeigen:
Fig. 1 eine schematische Darstellung des Heizungssystems als Blockschaltbild,
Fig. 2 einen in dem Heizungssystem nach Fig. 1 als Wärmequelle vorgesehenen Brennwertkessel in einer schematischen Darstellung,
Fig. 3a, 3b jeweils eine Energieverteilungseinrichtung des Heizungssystems nach Fig. 1 im Prinzipschaltbild,
Fig. 4 einen Energieabnehmerkreis des Heizungssystems nach Fig. 1 mit einem Radiator als Wärmeverbraucher in schematischer Darstellung,
Fig. 5 eine Vorrichtung zur Verhinderung der Auskühlung der Vorlaufleitung für ein Heizungssystem nach Fig. 1 mit einer temperaturabhängig gesteuerten Bypassleitung in schematischer Darstellung,
Fig. 6 den Energieabnehmerkreis des Heizungssystems nach Fig. 1 mit einem Luftheizregister als Wärmeverbraucher in schematischer Darstellung,
Fig. 7 den Energieabnehmerkreis des Heizungssystems nach Fig. 1 mit einem Boiler als Wärmeverbraucher in schematischer Darstellung,
Fig. 8 einen Energieabnehmerkreis des Heizungssystems nach Fig. 1, bei dem als Wärmeverbraucher eine über einen Wärmetauscher an das Heizungssystem angekoppelte Strahlungsheizung vorgesehen ist und
Fig. 9 einen Energieabnehmerkreis für das Heizungssystem nach Fig. 1, bei dem als Wärmeverbraucher ein in einem weiteren Heizkreislauf liegender Boiler über einen Wärmetauscher an das Heizungssystem angekoppelt ist.

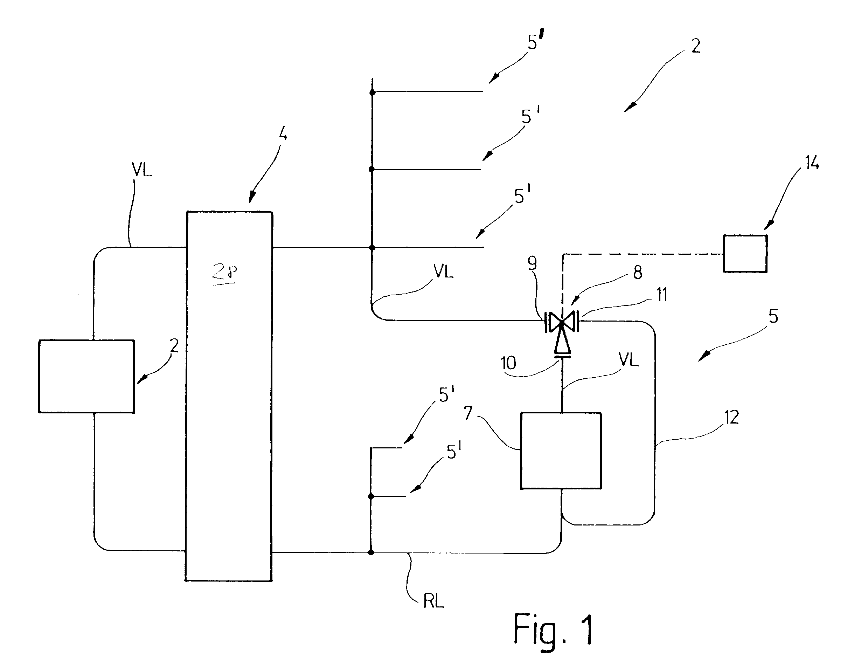

In Fig. 1 ist ein Heizungssystem 1 dargestellt, bei dem als Wärmequelle ein Brennwertkessel 2 dient. Dieser ist ein gasbeheizter Warmwasserkessel, dessen Energie durch gute Isolation und weitgehende Herunterkühlung der Abgase besonders gut ausgenutzt wird. Der Brennwertkessel 2 liegt mit seiner Vorlaufleitung VL an einer Energieverteilungseinrichtung 4, die das über die Vorlaufleitung VL als Heizmedium herangeführte Warmwasser auf mehrere Energieabnehmerkreise 5, 5' verteilt, von denen lediglich einer schematisch dargestellt ist. Von den Energieabnehmerkreisen 5 führt eine Rücklaufleitung RL das in den Energieabnehmerkreisen 5 weitgehend ausgekühlte Rücklaufwasser zu dem Brennwertkessel 2 zurück. Die Rücklaufleitung führt dabei nochmals durch die Energieverteilungseinrichtung 4.

Die Steuerung oder Regelung der Energieabnahme in dem Energieabnehmerkreis 5 und somit des Energieumsatzes eines in diesem angeordneten Wärmeverbrauchers 7 erfolgt hydrodynamisch über eine Strahlpumpe 8, deren Injektoranschluß 9 an der Vorlaufleitung VL und deren Diffusoranschluß 10 an die zu dem Wärmeverbraucher 7 führende Vorlaufleitung VL angeschlossen ist. Mit ihrem Sauganschluß 11 liegt die Strahlpumpe 8 über eine Bypassleitung 12 an der rücklaufwasserführenden Rücklaufleitung RL. Die Strahlpumpe 8 ist von einer Steuereinrichtung 14 gesteuert, wobei insbesondere das Verhältnis zwischen in der Strahlpumpe 8 miteinander gemischtem Vorlaufwasser und Rücklaufwasser eingestellt wird.

Parallel zu dem Energieabnehmerkreis 5 liegen die weiteren Energieabnehmerkreise 5', die lediglich schematisch angedeutet und jeweils für sich gesondert hydrodynamisch geregelt sind. Die anderen Energieabnehmerkreise 5' können von dem Energieabnehmerkreis 5 räumlich getrennt sein und mehr oder weniger weit entfernt liegen.

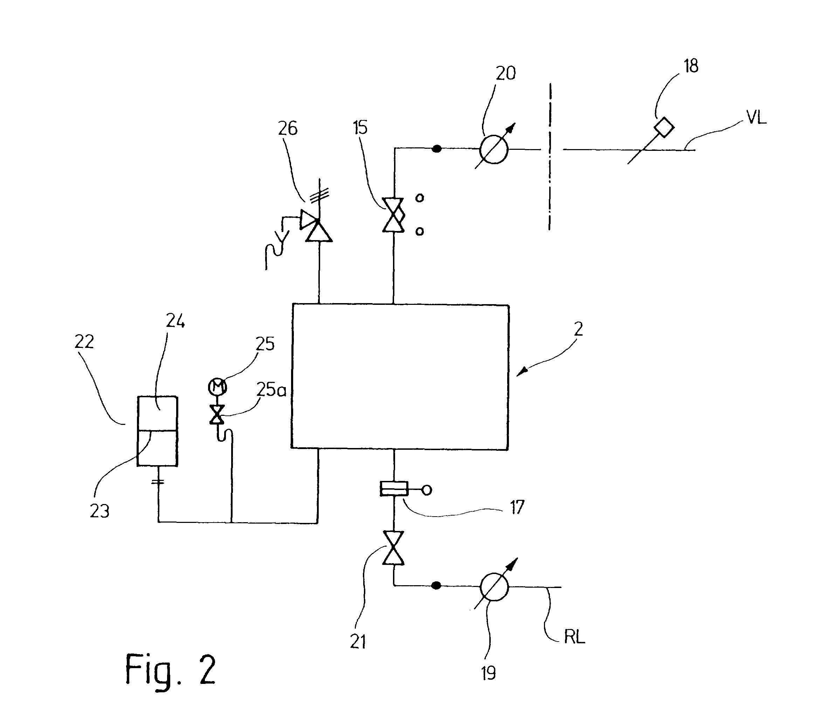

Der in Fig. 1 lediglich schematisch angedeutete Brennwertkessel 2 ist in Fig. 2 in seiner äußeren Beschaltung dargestellt. Der Brennwertkessel 2 weist einen nicht gesondert dargestellten Gebläsebrenner auf, mit dem ein zu verbrennendes Brennstoff-Luft-Gemisch in einen Brennraum eingeblasen wird.

In der von dem Brennwertkessel 2 wegführenden Vorlaufleitung VL liegt eine Absperrarmatur 15 zur Einstellung des Volumenstroms des in der Vorlaufleitung VL fließenden Wassers. Die Absperrarmatur 15 ist dazu mit einer nicht gesondert dargestellten weiteren Steuereinrichtung verbunden. Es ist über die Absperrarmatur 15 außerdem möglich, den Volumenstrom zu messen und entsprechende Meßwerte an die Steuereinrichtung zu liefern. An die Steuereinrichtung ist außerdem eine in der Rücklaufleitung RL liegende, dicht schließende motorgesteuerte Absperrklappe 17 angeschlossen, über die der Brennwertkessel für das Heizungssystem inaktiv geschaltet werden kann. Dies ist insbesondere bei der Zusammenschaltung mehrerer Brennwertkessel erforderlich, wobei entsprechend der Wärmeanforderung einige Brennwertkessel 2 stillsetzbar sind. Zur Systemüberwachung ist, insbesondere bei Zusammenschaltung mehrerer Brennwertkessel 2 in Tichelmann-Schaltung zu einem Block, in der Vorlaufleitung VL, die von dem Brennwertkessel 2 wegführt, ein Temperatursensor 18 vorgesehen, der die Temperatur des Vorlaufwassers an die Steuereinrichtung meldet.

Zur manuellen Überwachung sind sowohl in der Rücklaufleitung RL als auch in der Vorlaufleitung VL Thermometer 19, 20 vorgesehen. Außerdem ist zur manuellen Absperrung in der Rücklaufleitung RL eine Absperrarmatur 21 angeordnet. In der üblichen Weise sind außerdem an dem Brennwertkessel 2 ein Druckausdehnungsgefäß 22 mit einer Membran 23 und einer Luftvorlage 24 sowie ein mit einem Manometerhahn 25a versehenes Manometer 25 und ein Sicherheitsventil 26 vorgesehen.

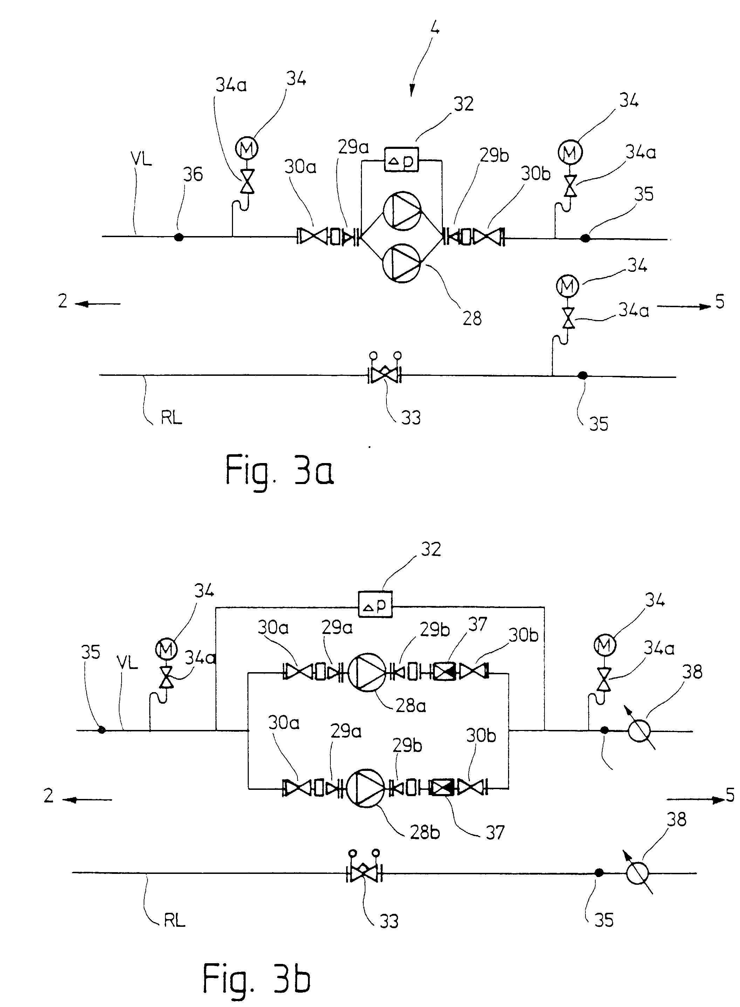

Der insoweit beschriebene Brennwertkessel 2 ist über eine der in den Fig. 3a und 3b dargestellte Energieverteilungseinrichtung 4 an den Energieabnehmerkreis 5 angeschlossen.

Die in Fig. 3a dargestellte Energieverteilungseinrichtung weist als zentrales Element eine in der Vorlaufleitung VL liegende elektrische als Zwillingspumpe 28 ausgebildete Pumpeinrichtung auf. Die Pumpeinrichtung der Energieverteilungseinrichtung 4 ist in der Vorlaufleitung VL angeordnet. Diese ist über jeweils einen vor- und einen nachgeschalteten Schwingungdämpfer oder Kompensator 29a, 29b sowie ebenfalls vor- bzw. nachgeschaltete Absperrarmaturen 30a, 30b in die Vorlaufleitung geschaltet. Parallel zu der Zwillingspumpe 28, d.h. an deren Saugseite und deren Druckseite ist eine Differenzdrucküberwachungseinrichtung 32 vorgesehen, die die Zwillingspumpe 28 auf einen konstanten Förderdruck steuert, d.h. daß der zwischen der Saugseite und der Druckseite der Zwillingspumpe 28 gemessene Druck unabhängig von dem Volumenstrom des durch die Zwillingspumpe 28 strömenden Wassers konstant bleibt. Wird eine Zwillingspumpe 28 einer entsprechenden Bauart verwendet, bei der der Förderdruck unabhängig von dem Volumenstrom konstant ist, kann auf eine gesonderte Differenzdrucküberwachungseinrichtung 32 verzichtet werden.

In der Rücklaufleitung RL ist eine Absperrarmatur 33 zur Einstellung bzw. Messung des in der Rücklaufleitung vorhandenen Volumenstroms angeordnet. Außerdem sind sowohl in der Rücklaufleitung RL als auch in der Vorlaufleitung VL vor bzw. nach der Zwillingspumpe 28 optisch ablesbare Manometer 34 mit Absperrhähnen 34a angebaut. Bei den Manometern 34 sind außerdem Meßpunkte 35 vorgesehen, die entsprechende zur Steuerung des Heizungssystems 1 erforderliche Prozeßparameter an die Steuereinrichtung 14 übermitteln.

Die in der Fig. 3b dargestellte Energieverteilungseinrichtung 4 unterscheidet sich von der vorbeschriebenen lediglich darin, daß anstelle der Zwillingspumpe 28 zwei zueinander parallel geschaltete Einzelpumpen 28a, 28b vorgesehen sind. Zur Verhinderung des strömungsmäßigen Kurzschlusses durch die jeweils andere Einzelpumpe 28a oder 28b bei Betrieb lediglich einer der Einzelpumpen 28a oder 28b ist jeder Einzelpumpe 28a, 28b eine federbelastete Rückschlagklappe 37 nachgeschaltet. Außerdem ist bei dieser Energieverteilungseinrichtung 4 in der Rücklaufleitung kein Manometer 34 vorgesehen. Zusätzlich jedoch sind sowohl in der Vorlaufleitung VL als auch in der Rücklaufleitung RL energieabnehmerseitig Thermometer 38 vorgesehen.

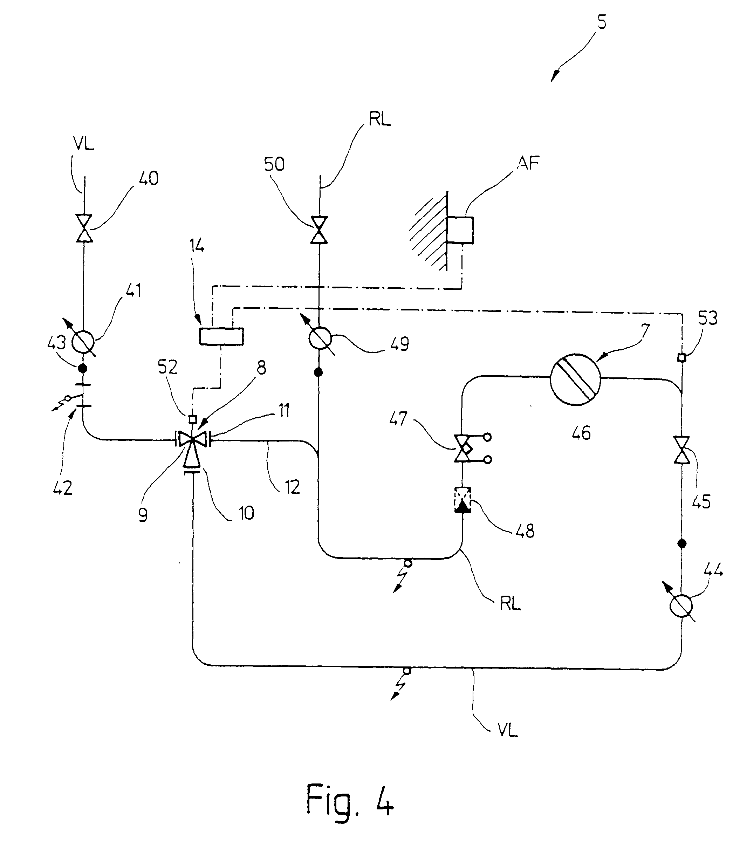

Der in Fig. 1 lediglich schematisch angedeutete Energieabnehmerkreis 5 ist im einzelnen in Fig. 4 dargestellt. Die Vorlaufleitung VL liegt über eine Absperrarmatur 40, ein Thermometer 41 sowie einen Füll- und Entleerungshahn 42 an dem Injektoranschluß 9 der Strahlpumpe 8. Außerdem ist in der Vorlaufleitung ein Meßpunkt 43 vorgesehen. Die sich an dem Diffusoranschluß 10 fortsetzende Vorlaufleitung VL führt über ein weiteres Thermometer 44 und einen Absperrhahn 45 zu Radiatoren 46, die den eigentlichen Wärmeverbraucher 7 bilden.

In der von den Radiatoren 46 wegführenden Rücklaufleitung RL liegen eine Absperrarmatur 47 zur Einstellung des Volumenstroms und zur Messung desselben sowie eine federbelastete Rückschlagklappe 48. Nach der abzweigenden und zu dem Sauganschluß 11 der Strahlpumpe 8 führenden Bypassleitung 12 sind nochmals ein visuell ablesbares Thermometer 49 sowie eine Absperrarmatur 50 angeordnet.

Die Strahlpumpe 8 ist in ihrem Mischverhältnis über einen Elektromotor 52 einstellbar, der von der Steuereinrichtung 14 gesteuert ist. Dieser überwacht die Außentemperatur mit einem Außentemperaturfühler AF. Außerdem erhält sie Information über die Vorlauftemperatur der Radiatoren 46 über einen in deren Vorlaufleitung VL liegenden Temperatursensor 53.

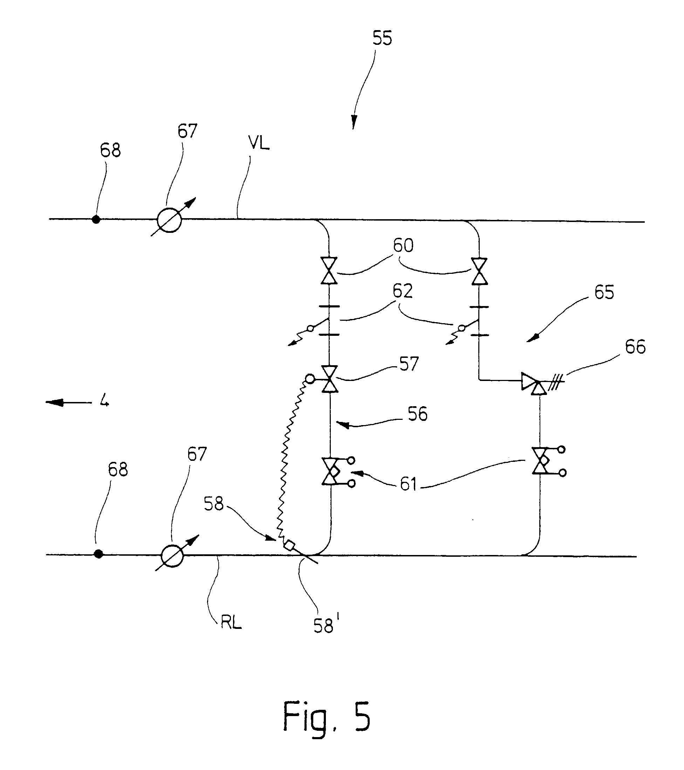

Über die in der Fig. 1 dargestellten Elemente hinaus ist dem am weitesten von der Energieverteilungseinrichtung 4 entfernt liegenden Energieabnehmerkreis 5 eine in Fig. 5 gesondert dargestellte Vorrichtung 55 zur Verhinderung der Auskühlung der Vorlaufleitung VL vorgeschaltet. Die Vorrichtung 55 weist eine zwischen Vorlaufleitung und Rücklaufleitung liegende Bypassleitung 56 auf, in der ein Durchgangsventil 57 vorgesehen ist, das von einem Kapillarthermostat 58 gesteuert ist. Der Kapillarthermostat 58 ist dabei mit seinem Temperaturfühler 58' in der Rücklaufleitung RL auf der Seite der Bypassleitung 56 angeordnet, die zu der Energieverteilungseinrichtung 4 hin liegt.

In der Bypassleitung 56 sind außerdem eine Absperrarmatur 60, eine Absperrarmatur 61 zur Einstellung und Messung des Volumenstromes sowie ein Schmutzfänger 62 mit Füll- und Entleerunghahn angeordnet.

Um das gesamte System gegen Überdruck zu schützen, ist der Bypassleitung 56 eine zweite Leitung 65 parallel geschaltet, die im wesentlichen die gleichen Armaturen 60, 61, 62 wie die Bypassleitung 56 enthält. Jedoch ist anstelle des thermostatgesteuerten Durchgangsventils 57 ein Überströmventil 66 vorgesehen, das bei Überschreiten eines Maximaldruckes öffnet.

Außerdem enthält die Vorrichtung 55 in der Vorlaufleitung VL und in der Rücklaufleitung RL jeweils ein Thermometer 67 sowie einen Meßpunkt 68, an denen mit der Steuereinrichtung 14 oder einer anderweitigen Überwachungseinrichtung verbundene Sensoren angeschlossen sein können.

Das insoweit beschriebene Heizungssystem arbeitet wie folgt:

Entsprechend dem Gesamtwärmebedarf des Heizungssystems 1 stellen der oder die Brennwertkessel 2 eine entsprechende Wärmemenge pro Zeit bereit, die in dem den Brennwertkessel 2 verlassenden Vorlaufwasser enthalten ist. Dabei wird der Volumenstrom so eingestellt, daß die Vorlauftemperatur, die für den Betrieb des Brennwertkessels günstigste Höhe aufweist. Bei einer Verringerung des Wärmebedarfs wird der Gesamtvolumenstrom verringert. Bei Mehrkesselsystemen können einzelne Brennwertkessel 2 durch Schließen der jeweiligen Absperrklappe 17 gänzlich stillgesetzt werden. Der Volumenstrom wird dabei für jeden Kessel an der Absperrarmatur 15 und für das Gesamtsystem an der zu der Energieverteilungseinrichtung 4 gehörigen Absperrarmatur 33 eingestellt.

Die das Vorlaufwasser von allen Brennwertkesseln aufnehmende Energieverteilungseinrichtung 4 bringt dieses nun unabhängig von dem konkreten Volumenstrom auf einen konstanten Förderdruck. Dieser steht über die Vorlaufleitung VL an den einzelnen Energieabnehmerkreisen 15 an.

Die Energieabnahme des einzelnen Energieabnehmerkreises 5, 5' wird durch Einstellung der Strahlpumpe 8 von der Steuereinrichtung 14 vorgenommen. Dieses stellt durch Mischung von Vorlaufwasser und Rücklaufwasser zu den Radiatoren 46 geführtes Vorlaufwasser bereit, dessen Temperatur beispielsweise anhand der von dem Temperatursensor 53 ermittelten Daten auf einen für den Betrieb des Wärmeverbrauchers 7 und den gewünschten Energieumsatz optimalen Wert eingestellt wird. Dies erfolgt bei schwankendem Volumenstrom in der Vorlaufleitung VL durch Einstellung des Mischverhältnisses an der Strahlpumpe 8. Außerdem kann die Steuereinrichtung 14 die in der zu den Radiatoren 46 führenden Vorlaufleitung VL herrschende Temperatur anhand der durch den Außentemperaturfühler AF ermittelten Außentemperatur steuern. Beispielsweise kann bei fallender Außentemperatur die Vorlauftemperatur erhöht werden.

Damit ist eine dezentrale Regelung möglich, wobei der einzelne Energieabnehmerkreis 5, 5' keinerlei elektrische Pumpen benötigt und rein hydrodynamisch gesteuert wird. Die einzigen im System vorhandenen elektrischen Pumpen sind in der Energieverteilungseinrichtung 4 angeordnet. Die bei unterschiedlichen Volumenströmen einen konstanten Förderdruck liefernde Energieverteilungseinrichtung 4 ermöglicht die Verwendung von einem oder mehreren Brennwertkesseln 2, die eine gute Brennstoffausnutzung bieten. Die Energieverteilungseinrichtung 4 kann auch mit einer Pumpe versehen sein, die eine abweichende, bspw. parabelförmige Kennlinie aufweist. Die Brennwertkessel werden durch Volumenstromeinstellung und die Wärmeverbraucher durch Einstellung der Vorlauftemperatur jeweils optimal gesteuert. Der Wirkungsgrad des gesamten Systems ist damit hoch, wobei der Installations- und der Wartungsaufwand gering sind.

Die Energieverteilungseinrichtung 4 und die daran angeschlossenen und darauf abgestimmten Energieverbraucherkreise 5, 5' ermöglichen in ihrer Abstimmung aufeinander den Betrieb an Brennwertkesseln 2, die nur mit variablen Volumenströmen in ihrem jeweils sparsamsten Arbeitspunkt betrieben werden können.

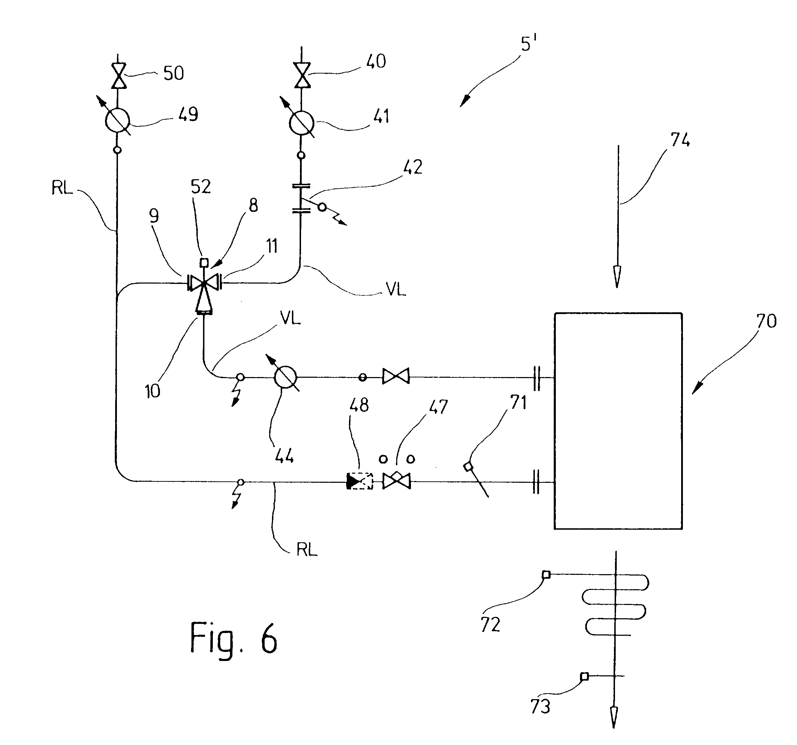

Die in Fig. 4 lediglich beispielsweise als Wärmeverbraucher 7 angedeuteten Radiatoren 46 können beispielsweise auch andere Wärmeverbraucher sein. In Fig. 6 ist eine Ausführungsform eines Energieabnehmerkreises 5' dargestellt, bei dem anstelle der Radiatoren 46 ein Luftheizregister 70 vorgesehen ist. Ansonsten wurden gleiche Elemente mit gleichen Bezugszeichen gekennzeichnet, so daß sich ein erneutes Eingehen auf dieselben erübrigt. Zusätzlich zu den in dem Energieabnehmerkreis 5 nach Fig. 4 vorgesehenen Elementen sind in der Rücklaufleitung RL des Luftheizregisters 70 ein mit der Steuereinrichtung 14 verbundener Temperatursensor 71 sowie ein an dem Luftheizregister vorgesehener Frostschutzthermostat 72 und ein Zuluftfühler 73 vorgesehen. Der Zuluftfühler 73 überwacht die Temperatur der das Luftheizregister 70 in Richtung des Pfeiles 74 durchströmenden Luft.

Der Energieabnehmerkreis 5' mit dem Zuluftregister 70 (Luftheizregister) arbeitet im wesentlichen wie der bereits beschriebene Energieabnehmerkreis 5 nach Fig. 4. Ein Unterschied kann darin liegen, daß die Vorlauftemperatur VL anders eingestellt ist, als es bei den Radiatoren 46 der Fall ist.

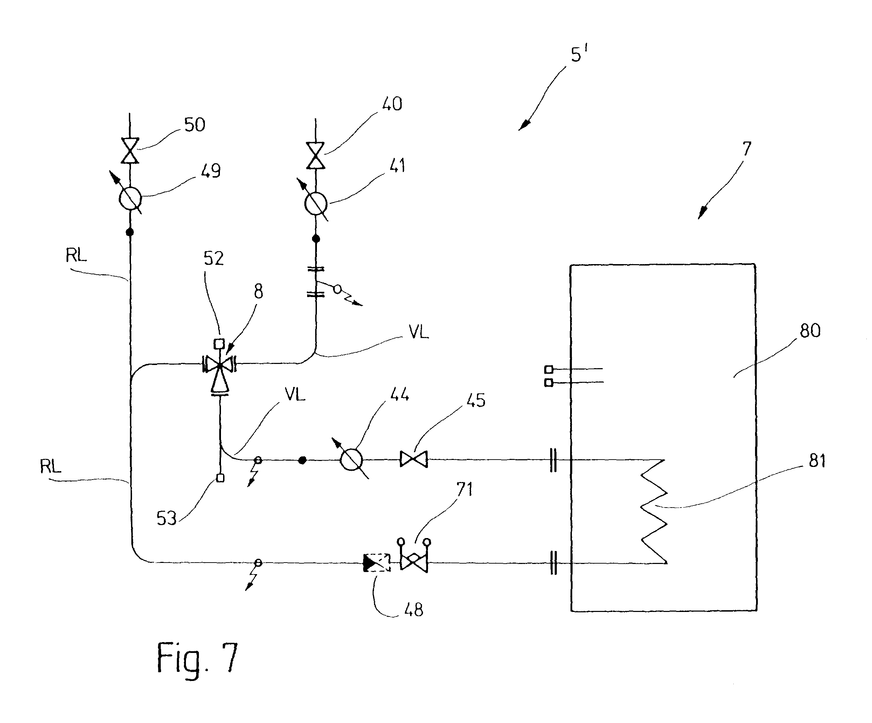

Eine weitere Ausführungsform eines Energieabnehmerkreises 5' ist in Fig. 7 dargestellt. Bei diesem Energieabnehmerkreis 5' ist der Wärmeverbraucher 7 ein Boiler 80. Mit dem Temperatursensor 53 wird die Vorlauftemperatur der zu dem Boiler 80 führenden Vorlaufleitung überwacht. Wegen der in dem Boiler 80 naturgemäß guten Kühlung des als Wärmeträger dienenden Warmwassers in einer zwischen Vorlaufleitung VL und Rücklaufleitung RL liegenden Heizschlange 81 kann auf einen Temperatursensor in der Rücklaufleitung verzichtet werden. Dafür weist der Boiler zwei Temperaturfühler, nämlich einen Grenzwertthermostat 82 und einen Temperatursensor 83 auf, die ein Überhitzen des Boilers 81 verhindern bzw. den aktuellen Wert der Boilertemperatur an die Steuereinrichtung 14 übermitteln.

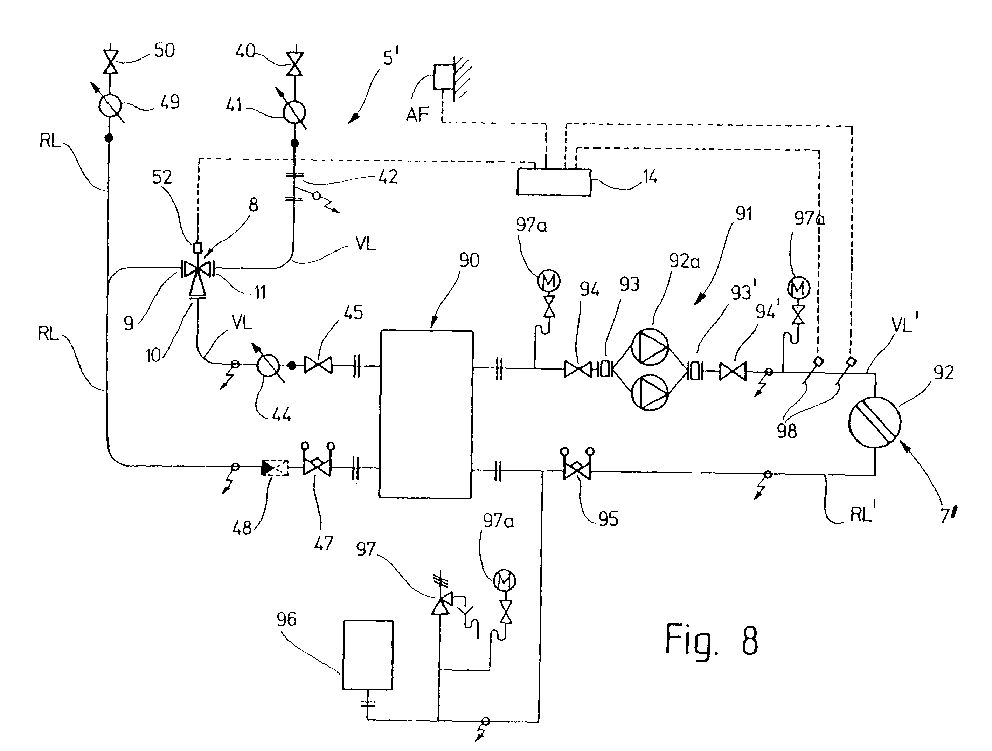

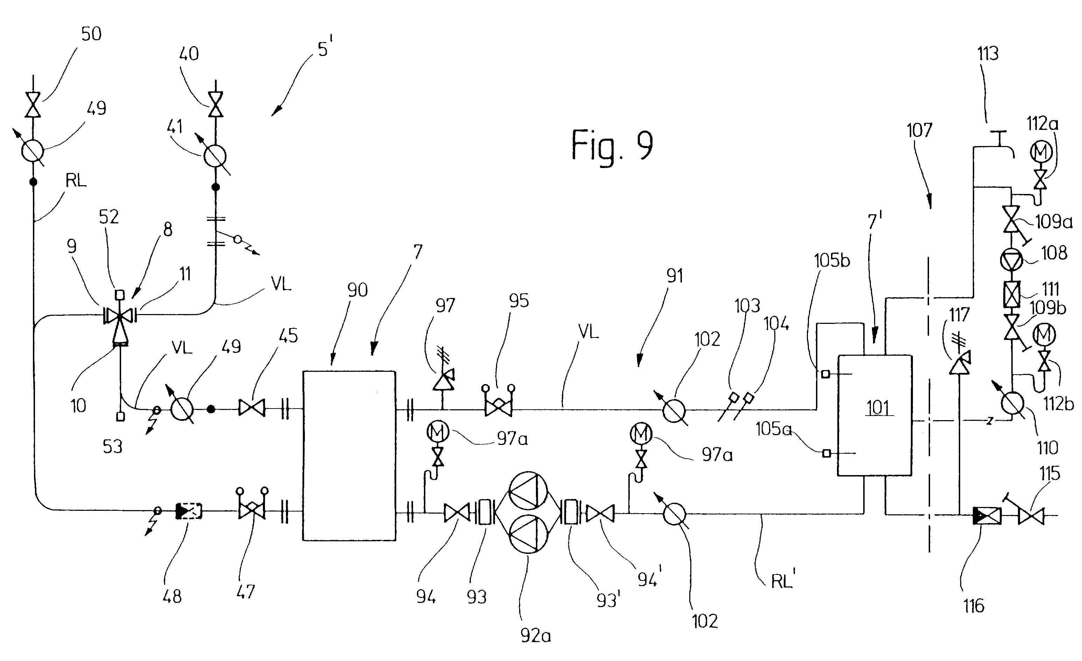

Alternative Ausführungsformen mit getrennten Heizungskreisläufen sind in den Fig. 8 und 9 dargestellt. Als Wärmeverbraucher 7 für das Heizungssystem 1 dient zunächst jeweils ein Wärmetauscher 90, der die Wärme auf einen zweiten Heizkreislauf 91 überträgt, in dem ein Wärmeverbraucher 7' liegt.

Bei dem Wärmeabnehmerkreis 5' nach Fig. 8 ist an den Wärmetauscher 90 ausgangsseitig eine Strahlungsheizung 92 angeschlossen. Eingangsseitig ist der Wärmetauscher so beschaltet, wie es bereits im Zusammenhang mit den Wärmeabnehmerkreisen 5, 5' der Fig. 4, 6 und 7 erläutert worden ist. Die Strahlungsheizung liegt über eine Umwälzpumpe 92a, die in einer Vorlaufleitung VL' angeordnet ist, an dem Wärmetauscher 90. Der Umwälzpumpe 92, die als Zwillingspumpe ausgebildet ist, sind Schwingungsdämper 93, 93' sowie Absperrventile 94, 94' vor- bzw. nachgeschaltet. Außerdem weist der Heizkreislauf 91 eine Absperrarmatur 95 zur Messung und Einstellung des Volumenstroms sowie ein Ausdehnungsgefäß 96 mit Überströmventil 97 und mehrere in dem Heizkreislauf 91 verteilte Manometer 97a auf.

Zur Überwachung und Steuerung des Systems dienen zusätzlich zu der über den Außentemperaturfühler AF erfaßten Außentemperatur noch in dem Heizkreislauf 91 gemessene Temperaturen von Sensoren 98.

Die Strahlungsheizung 92 kann eine mit niedriger Temperatur betriebene Heizung, wie beispielsweise eine Wandheizung, sein.

Der in Fig. 9 dargestellte Energieabnehmerkreis 5' stimmt bis zu dem Wärmetauscher 90, der ein Rohrbündeloder Plattenwärmetauscher ist, mit dem in Fig. 8 dargestellten Wärmeabnehmerkreis 5' überein, so daß ohne erneute Bezugnahme gleiche Bezugszeichen verwendet worden sind. In dem Wärmeabnehmerkreis 5' nach Fig. 9 sind in dem sekundären Heizkreislauf 91 mehrere Boiler 101 vorgesehen, von denen lediglich einer dargestellt ist. Soweit in diesem Wärmeabnehmerkreis 5' gleiche Elemente vorhanden sind, wie bei dem in Fig. 8 dargestellten Wärmeabnehmerkreis 5', sind gleiche Bezugszeichen verwendet, wodurch sich eine nochmalige Bezugnahme auf diese Elemente an dieser Stelle erübrigt.

Zusätzlich zu den in Fig. 8 vorhandenen Elementen ist in der an den Diffusoranschluß 10 der Strahlpumpe 8 angeschlossenen Vorlaufleitung VL ein Temperatursensor 53' vorgesehen, der die an den Wärmetauscher, der ein Rohrbündel- oder Plattenwärmetauscher ist, gelieferte Vorlauftemperatur an die hier nicht gesondert dargestellte Steuereinrichtung 14 meldet. Auch der Heizkreislauf 91 stimmt weitgehend mit dem in Fig. 8 dargestellten überein, wobei jedoch die Zwillingspumpe 92a, die ihr zugeordneten Schwingungsdämpfer 93, 93', die zugehörigen Absperrventile 94 sowie die Manometer 97a in der Rücklaufleitung RL' angeordnet sind. Umgekehrt liegen das Überströmventil 97 und die Absperrarmatur 95 zur Begrenzung und Messung des Volumenstroms in der Vorlaufleitung VL' des Heizkreislaufes 91. Zur besseren Überwachung sind sowohl in der Vorlaufleitung VL' als auch in der Rücklaufleitung RL' jeweils ein Thermometer 102 angeordnet. Außerdem liegen in der Vorlaufleitung VL' ein Temperaturfühler 103, der die aktuelle Vorlauftemperatur in ein Signal wandelt, das an die hier nicht gesondert dargestellte Steuereinrichtung 14 geliefert wird sowie ein Grenzwertthermostat 104, der die Überhitzung des Boilers 101 verhindert.

Zur besseren Überwachung ist der Boiler 101 außerdem mit einem in der Nähe seines Bodens angeordneten Temperatursensor 105a sowie mit einem in seinem oberen Abschnitt angeordneten weiteren Temperatursensor 105b versehen, die beide mit der Steuereinrichtung 14 verbunden sind.

Um eine gleichmäßige Erwärmung des in dem Boiler 101 vorhandenen Wassers zu ermöglichen, weist dieser einen Zirkulationskreis 107 auf. Dieser entnimmt dem Boiler 101 Wasser an der Oberseite und speist es knapp unterhalb seiner Mitte wieder ein. In dem Zirkulationskreis 107 ist eine elektrische Pumpe 108 anqeordnet, die zwischen zwei Handabsperrventilen 109a, 109b liegt. Außerdem weist der Zirkulationskreis 107 ein Thermometer 110, eine unmittelbar hinter der elektrischen Pumpe 108 angeordnete Rückschlagklappe 111 sowie zwei Manometer 112a, 112b auf. Eine Entnahmestelle für Warmwasser ist an dem Zirkulationskreis 107 angeschlossen, sie liegt in einem zu dem Zirkulationskreis 107 gehörigen, unmittelbar von dem Boiler 101 herkommenden Rohrabschnitt. Einen Kaltwasseranschluß 114 weist der Boiler an seiner Unterseite auf, dieser ist über ein Handabsperrventil 115 sowie eine Rückschlagklappe 116 mit dem am Aufstellort vorhandenen Kaltwassernetz verbunden. Um den Boiler 101 vor Überdrücken zu schützen, ist in der Kaltwasserleitung ein Überströmventil 117 angeordnet.

Um bei einem Heizungssystem 1, das als Wärmeträger Warmwasser nutzt, eine gute Energieausnutzung und einen möglichst geringen Installationsaufwand und Wartungsbedarf zu erhalten, sind als Wärmequelle ein oder mehrere Brennwertkessel 2 vorgesehen, die an eine zentrale Energieverteilungseinrichtung 4 angeschlossen sind. In dieser Energieverteilungseinrichtung 4 ist die einzige im System vorhandene elektrische Pumpeinrichtung 28 angeordnet. Der Energieverteilungseinrichtung 4 sind mehrere Energieabnehmerkreise 5 mit Wärmeverbrauchern nachgeschaltet, in denen die Energieabnahme durch Steuerung oder Regelung der Vorlauftemperatur der Wärmeverbraucher 7 mittels Beimischung von Rücklaufwasser erfolgt. Die mit im wesentlichen konstanter Temperatur betriebenen Brennwertkessel 2 werden in ihrer Energieabgabe durch eine entsprechende Veränderung des Volumenstroms des Wassers an den Heizbedarf angepaßt. Damit variiert der Volumenstrom im Heizkreislauf. Die Anpassung der Wärmeverbraucher 7 an deren Heizbedarf erfolgt ohne elektrische Pumpen allein durch in den Wärmeverbraucherkreisen angeordnete Strahlpumpen 8 auf hydrodynamischem Weg. Um dies zu ermöglichen, erzeugt die einzige zentrale elektrische Pumpeinrichtung 28 bei variablem Volumenstrom einen konstanten Förderdruck.

## Patentansprüche

1. Heizungssystem (1), bei dem
wenigstens ein als Wärmequelle dienender Brennwertkessel (2) mit einer Vorlaufleitung (VL) und einer Rücklaufleitung, der das in dem Heizungssystem (1) befindliche Wasser im Kreislauf erwärmt und durch Volumenstromeinstellung an schwankenden Wärmebedarf anpaßbar ist, wobei der über die Vorlaufleitung abgegebene Warmwasser-Volumenstrom mit dem den Brennwertkessel (2) durchströmenden Volumenstrom identisch ist,
mit einer an den Brennwertkessel (2) angeschlossenen Energieverteilungseinrichtung (4), die eine einzige an den Brennwertkessel (2) angeschlossene elektrische Pumpeinrichtung (28) sowie eine Steuereinrichtung (33) zur Volumenstromeinstellung enthält, wobei die Pumpeinrichtung (28) bei variablem Volumenstrom einen für wesentlichen konstanten Förderdruck liefert,
mit wenigstens einem über eine Strahlpumpe (8) an die Energieverteilungseinrichtung (4) angeschlossenen, in einem Energieabnehmerkreis (5,5') liegenden Wärmeverbraucher (7), aus dessen Rücklaufleitung (RL) die Strahlpumpe (8) Rücklaufwasser ansaugen kann, um es dem Vorlaufwasser beizumischen, und
mit einer Steuereinrichtung (14), die wenigstens die Strahlpumpe (8) steuert, kombiniert ist.

2. Heizungssystem nach Anspruch 1, dadurch gekennzeichnet, daß es ein Niedertemperatursystem ist, bei dem die Rücklauftemperatur nahe bei der Temperatur des Mediums legt, das bei dem Wärmeverbraucher (7) zu erwärmen ist.

3. Heizungssystem nach Anspruch 1, dadurch gekennzeichnet, daß als Wärmequelle mehrere Brennwertkessel (2) zusammengeschaltet sind und daß die Brennwertkessel (2) entsprechend der Kesselfolgeschaltung über jeweils einen Motor gesteuerte Absperrklappe (17) in Abhängigkeit vom Wärmebedarf zu- oder abgeschaltet werden.

4. Heizungssystem nach Anspruch 3, dadurch gekennzeichnet, daß die Absperrklappe (17) vor dem Brennwertkessel (2) in dessen Rücklaufleitung (RL) angeordnet ist und daß die Absperrklappe (17) von der Steuereinrichtung (14) gesteuert ist.

5. Heizungssystem nach Anspruch 1, dadurch gekennzeichnet, daß der Brennwertkessel (2) zur Messung und Einstellung des Volumenstroms des ihn durchströmenden Wassers in einer Vorlaufleitung (VL) eine Mess- und Absperrarmatur (15) aufweist.

6. Heizungssystem nach Anspruch 1, dadurch gekennzeichnet, daß die Pumpeinrichtung (28) eine Differenzdrucküberwachungseinrichtung (32) aufweist, die die Druckdifferenz zwischen Pumpenausgang und Pumpeneingang bei laufender Pumpe unabhängig von der Durchflußmenge konstant hält.

7. Heizungssystem nach Anspruch 1, dadurch gekennzeichnet, daß die Energieverteilungseinrichtung (4) eine in ihrer Rücklaufleitung (RL) angeordnete Meß- und Absperrarmatur (33) zur Einstellung und Messung des Volumenstroms des durchströmenden Heizwassers aufweist.

8. Heizungssystem nach Anspruch 1, dadurch gekennzeichnet, daß der Wärmeverbraucher (7) mit seiner Vorlaufleitung (VL) an einen an der Strahlpumpe (8) vorhandenen Diffusorausgang (10) angeschlossen ist, an dem von der Energieverteilungseinrichtung (4) ankommendes Heizwasser oder ein Gemisch aus diesem und Rücklaufwasser ansteht, daß der Wärmeverbraucher (7) über einen Abzweig (12) seiner Rücklaufleitung (RL) an einen Sauganschluß (11) der Strahlpumpe (8) angeschlossen ist und daß die Strahlpumpe (8) mit ihrem Einspeiseanschluß (9) an eine von der Energieverteilungseinrichtung (4) herkommende Vorlaufleitung (VL) angeschlossen ist.

9. Heizungssystem nach Anspruch 1, dadurch gekennzeichnet, daß die Strahlpumpe (8) eine Reguliereinrichtung aufweist, mittels derer das Mischverhältnis einstellbar ist und daß die Reguliereinrichtung durch einen von der Steuereinrichtung (14) gesteuerten Elektromotor (52) einstellbar ist.

10. Heizungssystem nach Anspruch 1, dadurch gekennzeichnet, daß zwischen der Energieverteilungseinrichtung (4) und dem Wärmeverbraucher (7) eine Vorrichtung (55) zur Verhinderung der Auskühlung der von der Energieverteilungseinrichtung (4) ankommenden Vorlaufleitung (VL) vorgesehen ist, die ein zwischen Vor- und Rücklaufleitung (VL, RL) angeordnetes temperaturabhängig gesteuertes Ventil (57) aufweist, das öffnet, wenn die Temperatur der Rücklaufleitung (RL) einen vorgegebenen Grenzwert unterschreitet.

11. Heizungssystem nach Anspruch 10, dadurch gekennzeichnet, daß die Vorrichtung (55) bei dem am weitesten von der Energieverteilungseinrichtung (4) entfernt liegenden Wärmeverbraucher (7) angeordnet ist.

## Claims

1. A heating system (1), in which there is in combination
at least one calorific value boiler (2) serving as a heat source with a feed line (VL) and a return line, which heats the circulating water situated in the heating system (1) and which can be adjusted to the fluctuating heat requirement by volumetric flow rate adjustment, wherein the hot water volumetric flow provided via the feed line is identical to the volumetric flow flowing through the calorific value-typ or condensing boiler (2),
with an energy-distributing means (4) which includes a single electric pump means (28) connected to the calorific value boiler (2) and a control means (33) for volumetric flow adjustment, wherein with variable volumetric flow the pump means (28) provides a substantially constant delivery pressure,
with at least one heat consumer (7) connected to the energy-distributing means (4) and disposed in an energy-consumer circuit (5,5'), from the return line (RL) of which heat consumer a jet pump (8) can draw return water so as to admix it with the feed water, and
with a control device (14) which controls at least the jet pump (8).

2. A heating system according to Claim 1, characterised in that it is a low-temperature system, in which the return flow temperature is close to the temperature of the medium which is to be heated in the heat consumer (7).

3. A heating system according to Claim 1, characterised in that as the heat source a plurality of calorific value boilers (2) are interconnected, and in that, according to the boiler sequential circuit, the calorific value boilers (2) can be connected or disconnected via a respective motor-controlled shut-off valve (17), as a function of the heat requirement.

4. A heating system according to Claim 3, characterised in that the shut-off valve (17) is disposed upstream of the calorific value boiler (2) in its return line (RL), and in that the shut-off valve (17) is controlled by the control device (14).

5. A heating system according to Claim 1, characterised in that for measuring and adjusting the volumetric flow of the water flowing through it the calorific value boiler (2) has a measuring and shut-off element (15) in a feed line (VL).

6. A heating system according to Claim 1, characterised in that the pump means (28) has a differential-pressure monitoring device (32) which maintains the pressure difference between the pump outlet and pump inlet constant when the pump is operating, irrespective of the throughflow rate.

7. A heating system according to Claim 1, characterised in that the energy-distributing means (4) has a measuring and shut-off element (33) disposed in its return line (RL) for adjusting and measuring the volumetric flow of the heating water flowing therethrough.

8. A heating system according to Claim 1, characterised in that the heat consumer (7) is connected with its feed line (VL) to a diffuser outlet (10) provided at the jet pump (8), at which heating water arriving from the energy-distributing means (4) or a mixture thereof and return water is present, in that the heat consumer (7) is connected via a branch (12) of its return line (RL) to an intake connector (11) of the jet pump (8), and in that the jet pump (8) is connected with its feed connector (9) to a feed line (VL) coming from the energy-distributing means (4).

9. A heating system according to Claim 1, characterised in that the jet pump (8) has a regulating device, by means of which the mixing ratio can be adjusted, and in that the regulating means can be adjusted by an electric motor (52) controlled by the control device (14).

10. A heating system according to Claim 1, characterised in that between the energy-distributing means (4) and the heat consumer (7) there is provided a device (55) for preventing cooling of the feed line (VL) coming from the energy-distributing means (4), which has a temperature-dependent controlled valve (57) which is disposed between the feed line and return line (VL,RL) and which opens when the temperature of the return line (RL) falls below a preset limit value.

11. A heating system according to Claim 10, characterised in that the device (55) is disposed at the heat consumer (7) situated most remote from the energy-distributing means (4).

## Revendications

1. Système de chauffage (1) dans lequel
au moins une chaudière à condensation (2) servant de source de chaleur, qui comprend une conduite de départ (VL) et une conduite de retour et qui chauffe en circuit l'eau se trouvant dans le système de chauffage (1) et peut être adaptée par réglage de débit volumique à une demande de chaleur variable, le débit volumique d'eau chaude par la conduite de départ étant identique au débit volumique traversant la chaudière à condensation (2), est combinée
avec un dispositif de distribution d'énergie (4) qui est raccordé à la chaudière à condensation (2) et qui contient un unique dispositif de pompage électrique (28) raccordé à la chaudière à condensation (2) ainsi qu'un dispositif de commande (33) pour le réglage du débit volumique, le dispositif de pompage (28) fournissant, pour un débit volumique variable, une pression de refoulement essentiellement constante,
avec au moins un consommateur de chaleur (7) qui est raccordé par une pompe à jet (8) au dispositif de distribution d'énergie (4), qui est situé dans un circuit de soutirage d'énergie (5, 5') et à partir de la conduite de retour (RL) duquel la pompe à jet (8) peut aspirer de l'eau de retour pour la mélanger à l'eau de départ, et
avec un dispositif de commande (14) qui commande au moins la pompe à jet (8).

2. Système de chauffage suivant la revendication 1, caractérisé par le fait qu'il est constitué par un système à basse température dans lequel la température de départ est proche de la température du fluide qui doit être chauffé par le consommateur de chaleur (7).

3. Système de chauffage suivant la revendication 1, caractérisé par le fait que plusieurs chaudières à condensation (2) sont groupées en tant que source de chaleur et que les chaudières à condensation (2) sont mises en circuit ou hors circuit en fonction de la commande séquentielle de chaudières en passant respectivement par une vanne d'arrêt (17) commandée par moteur, en fonction de la demande de chaleur.

4. Système de chauffage suivant la revendication 3, caractérisé par le fait que la vanne d'arrêt (17) est disposée en amont de la chaudière à condensation (2) dans la conduite de retour (RL) de cette dernière et que la vanne d'arrêt (17) est commandée par le dispositif de commande (14).

5. Système de chauffage suivant la revendication 1, caractérisé par le fait que la chaudière à condensation (2) présente une robinetterie de mesure et d'arrêt (15) dans une conduite de départ (VL) en vue de la mesure et du réglage du débit volumique de l'eau qui la traverse.

6. Système de chauffage suivant la revendication 1, caractérisé par le fait que le dispositif de pompage (28) présente un dispositif de surveillance de pression différentielle (32) qui maintient constante la différence de pression entre la sortie de pompe et l'entrée de pompe, la pompe étant en marche, indépendamment du débit de passage.

7. Système de chauffage suivant la revendication 1, caractérisé par le fait que le dispositif de distribution d'énergie (4) présente une robinetterie de mesure et d'arrêt (33) disposée dans sa conduite de retour (RL) en vue du réglage et de la mesure du débit volumique de l'eau de chauffage qui le traverse.

8. Système de chauffage suivant la revendication 1, caractérisé par le fait que le consommateur de chaleur (7) est raccordé par sa conduite de départ (VL) à une sortie de diffuseur (10) de la pompe à jet (8), sortie à laquelle est présente de l'eau de chauffage venant du dispositif de distribution d'énergie (4) ou un mélange de cette eau de chauffage et d'eau de retour, que le consommateur de chaleur (7) est raccordé par une dérivation (12) de sa conduite de retour (RL) à un raccord d'aspiration (11) de la pompe à jet (8) et que la pompe à jet (8) est reliée par son raccord d'alimentation (8) à une conduite de départ (VL) venant du dispositif de distribution d'énergie (4).

9. Système de chauffage suivant la revendication 1, caractérisé par le fait que la pompe à jet (8) présente un dispositif de régulation à l'aide duquel le rapport de mélange est réglable et que le dispositif de régulation est réglable par un moteur électrique (52) commandé par le dispositif de commande (14).

10. Système de chauffage suivant la revendication 1, caractérisé par le fait qu'entre le dispositif de distribution d'énergie (4) et le consommateur de chaleur (7) se trouve un dispositif (55) qui empêche un sous-refroidissement de la conduite de départ (VL) venant du dispositif de distribution d'énergie (4) et qui présente une vanne (57) commandée en fonction de la température, disposée entre la conduite de départ et la conduite de retour (VL, RL) et ouvrant lorsque la température de la conduite de retour (RL) tombe en dessous d'une valeur limite prédéterminée.

11. Système de chauffage suivant la revendication 10, caractérisé par le fait que le dispositif (55) est disposé dans la zone du consommateur de chaleur (7) qui est le plus éloigné du dispositif de distribution d'énergie (4).
